# EUROPEAN PATENT APPLICATION

(11) **EP 2 477 052 A1**
(43) Date of publication of application: **18.07.2012**
(21) Application number: 11250353.7
(22) Date of filing: 21.03.2011
(51) Int. Cl.: G02B 7/02, G02B 13/00

(54) **Lens module and method of manufacturing the same**

(30) Priority: 18.01.2011 KR 20110004929
(71) Applicant: Samsung Electro-Mechanics Co., Ltd., Suwon-si, Gyunggi-do (KR)
(72) Inventor: Seo, Dong Hyun, Suwon Gyunggi-do (KR)
(74) Representative: Powell, Timothy John

(57) **Abstract**

There are provided a lens module and a method of manufacturing the same. The lens module includes: a lens unit having at least one or more lenses stacked along an optical axis; and spacers disposed at corners of the at least one or more lenses so that lenses disposed to be adjacent to each other in an optical axis direction of the lens unit have a predetermined distance maintained therebetween.

## Description

### CROSS-REFERENCE TO RELATED APPLICATIONS

This application claims the priority of Korean Patent Application No. 10-2011-0004929 filed on January 18, 2011, in the Korean Intellectual Property Office, the disclosure of which is incorporated herein by reference.

### BACKGROUND OF THE INVENTION

### Field of the Invention

The present invention relates to a lens module and a method of manufacturing the same, and more particularly, to a lens module having spaced distances between the lenses thereof, while having a minimized overall size, and a method of manufacturing the same.

### Description of the Related Art

Recently, technologies for use in various mobile devices, having enhanced audio information and data transmission/reception functions, as well as beaing readily portable, have been rapidly developed and utilized. Particularly, a camera module mounting terminal including a camera function, in which a digital camera technology-based camera module is incorporated into a portable radio communications terminal to thereby photograph and store still and moving images of a subject and transfer these still and moving images to a second party, has been commercialized.

In order to allow a camera module mounted in a small portable terminal to have a large amount of pixels, in the case of a lens used for the camera module, there is a trend toward the stacking and using of at least one or more lenses along an optical axis. In this case, in order to adjust a focal length, a spacer spacing the lenses apart from each other by a predetermined distance is provided.

In order to implement the spacer, a method in which a portion except for a lens function surface of the lens, that is, an outer portion of the lens, is processed to be thicker than a portion in which the lens function surface is formed to be used as the spacer, a method in which a separate spacer member enclosing the outer portion of the lens is manufactured to be disposed between the lenses during the assembly of the camera module, or the like, have been used.

In the case of a recently manufactured lens, while the lens function surface has a circular shape, the overall lens has a rectangular planar cross section. Therefore, in the case of using the outer portion of the lens as a spacer, or in the case of a separate member enclosing the outer portion of the lens, a space for forming the spacer at the outer portion of the lens should be prepared, thereby causing problems such as an enlarged lens size and a difficulty in processing the lens.

### SUMMARY OF THE INVENTION

An aspect of the present invention provides a lens module having spaced distances between the lenses thereof, while having a minimized overall size, and a method of manufacturing the same.

According to an aspect of the present invention, there is provided a lens module including: a lens unit having at least one or more lenses stacked along an optical axis; and spacers disposed at corners of the at least one or more lenses so that lenses disposed to be adjacent to each other in an optical axis direction of the lens unit have a predetermined distance maintained therebetween.

The spacers may have a pillar shape.

The lens may have a lens function surface formed on at least one surface thereof and a flange formed around the lens function surface.

The spacers may be disposed at corners of the flange.

The lens may have a rectangular shape.

The spacers may be disposed at four corners of the lens, respectively.

The spacers may be made of the same material as that of the lens.

The spacers may be made of a material containing a black component so as to block unnecessary light incident through the lens unit.

According to another aspect of the present invention, there is provided a method of manufacturing a lens module, the method including: preparing at least one or more lenses; disposing spacers at corners of the at least one or more lenses so that lenses disposed to be adjacent to each other in an optical axis direction thereof have a predetermined distance maintained therebetween; and stacking the at least one or more lenses along an optical axis such that the spacers are interposed therebetween.

The preparing of the at least one or more lenses may include cutting a lens wafer having the at least one or more lenses arranged therein in lens units.

The disposing of the spacers may include disposing spacer members at corners of one lens and corners of adjacent lenses in the lens wafer and cutting the lens wafer in lens units.

The stacking of the at least one or more lenses along the optical axis may include stacking another lens wafer on the spacer members disposed on the lens wafer and cutting the stacked lens wafers in lens units.

The preparing of the at least one or more lenses may include forming a lens function surface on at least one surface of each of the at least one or more lenses and forming a flange around the lens function surface.

The disposing of the spacers may include disposing the spacers at corners of the flange.

The preparing of the at least one or more lenses may include preparing a lens having a rectangular shape.

The disposing of the spacers may include disposing the spacers at four corners of the lens, respectively.

The spacers may be made of the same material as that of the lens.

The spacers may be made of a material containing a black component so as to block unnecessary light incident through the lens.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is an exploded perspective view of a lens module according to an exemplary embodiment of the present invention;

FIG. 2 is a vertical cross-sectional view of a lens module according to an exemplary embodiment of the present invention;

FIG. 3 is a perspective view showing the configuration of a portion of a lens module according to an exemplary embodiment of the present invention;

FIG. 4 is a view showing a method of manufacturing a lens module according to an exemplary embodiment of the present invention; and

FIG. 5 is a view showing a method of manufacturing a lens module according to an exemplary embodiment of the present invention.

### DETAILED DESCRIPTION OF THE PREFERRED EMBODIMENT

Exemplary embodiments of the present invention will now be described in detail with reference to the accompanying drawings. However, it should be noted that the spirit of the present invention is not limited to the exemplary embodiments set forth herein and those skilled in the art and understanding the present invention could easily accomplish retrogressive inventions or other exemplary embodiments included in the spirit of the present invention by the addition, modification, and removal of components within the same spirit, but those are to be construed as being included in the spirit of the present invention.

In addition, components having like functions are denoted by like reference numerals throughout the drawings of each exemplary embodiment.

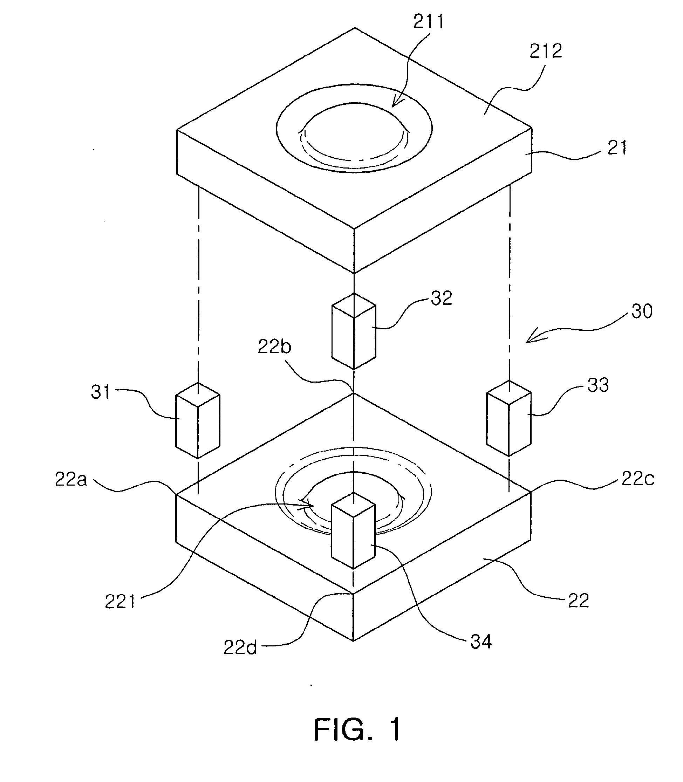

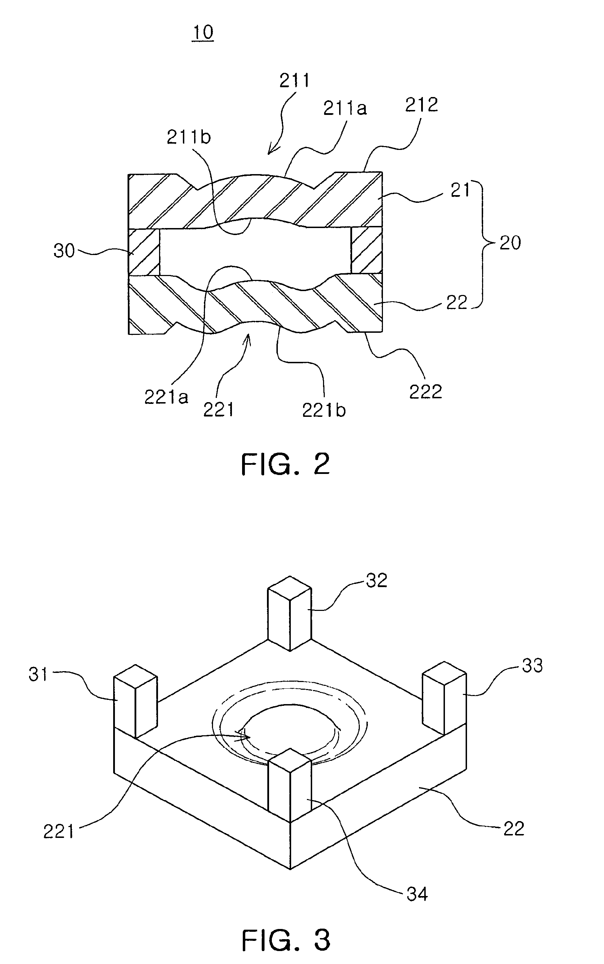

FIG. 1 is an exploded perspective view of a lens module according to an exemplary embodiment of the present invention; FIG. 2 is a vertical cross-sectional view of a lens module according to an exemplary embodiment of the present invention; and FIG. 3 is a perspective view showing the configuration of a portion of a lens module according to an exemplary embodiment of the present invention.

Referring to FIGS. 1 through 3, a lens module 10 according to an exemplary embodiment of the present invention includes a lens unit 20 including at least one or more lenses and spacers 30 spacing at least one or more lenses apart from each other.

The lens unit 20 includes a first lens 21 and a second lens 22 sequentially formed from an object side toward an image side. Although the present exemplary embodiment describes a case in which the lens unit 20 includes two lenses, the present invention is not limited thereto. The lens unit 20 may include at least two lenses, that is, a plurality of lenses.

Although the present exemplary embodiment describes a case in which the lens unit 20 has a structure in which a plurality of lenses are stacked, the present invention is not limited thereto. The lens unit 20 may also have a structure in which the plurality of lenses are inserted into and assembled in a lens barrel, and a structure of the lens module may be variously changed, according to design conditions.

The lens creates an optical image by forming a spherical surface or an aspherical surface made of a transparent material to collect and emit light incident from an object. As the lens, there may be provided a plastic lens and a glass lens. The plastic lens, formed by injecting a resin into a mold, pressing and hardening the resin to manufacture lenses in a wafer scale and then individualizing the lenses, has a low manufacturing cost and may be mass-produced. Meanwhile, the glass lens is advantageous for implementing high resolution; however, the glass lens is manufactured by cutting and grinding glass, such that it has a complicated manufacturing process, and a high cost, and there is a difficulty in implementing a lens other than a spherical lens or a planar lens.

In the present exemplary embodiment, the plastic lens manufactured in the wafer scale is used. The first lens 21 has a first lens function unit 211 formed at a center thereof, and a first flange 212 forming the outer circumference of the first lens function unit 211. Upper and lower surfaces of the first lens function unit 211 are provided with lens function surfaces 211a and 211b respectively formed as a spherical surface or an aspherical surface.

Likewise, the second lens 22 has a second lens function unit 221 formed at a center thereof, and a second flange 222 forming the outer circumference of the second lens function unit 221. Upper and lower surfaces of the second lens function unit 221 are provided with lens function surfaces 221a and 211b respectively formed as a spherical surface or an aspherical surface.

The first and second lens function units 211 and 221 may have a circular edge, and the first and second flanges 212 and 222 may have a rectangular edge. Therefore, the first and second lenses 21 and 22 may have a rectangular shape.

The first lens 21 may include the lens function surfaces 211a and 211b formed in a manner such that the first lens function unit 211 is convex to the object side, and the second lens 22 may include the lens function surfaces 221a and 221b formed in a manner such that the second lens function unit 221 is convex to the object side at a center thereof and convex to the image side toward the second flange 222. Meanwhile, the lenses according to an exemplary embodiment of the present invention are not limited thereto but may include the lens function unit having various shapes.

The spacers 30 are disposed between the first and second lenses 21 and 22 adjacent to each other in an optical axis direction so that the first and second lenses 21 and 22 have a predetermined distance maintained therebetween.

The spacers 30 are disposed at corners of the lens, more specifically, at corners of the flange. That is, first to fourth spacers 31 to 34 may be respectively disposed at four corners 22a to 22d of the second flange 222 of the second lens 22 having the rectangular shape.

The spacers 30 may have a pillar shape. However, they are not limited thereto, and for example, the spacers 30 may have various shapes such as a polygonal pillar shape including a rectangular pillar, an arc pillar shape, or the like.

The spacer 30 may be made of the same material as, or of a material different to, that of the lens. For example, the spacer 30 may also be made of a material containing a black component so as to block unnecessary light incident through the lens.

The spacer 30 may be adhered and fixed to the first and second lenses 21 and 22 by an adhesive. As the adhesive, a thermosetting adhesive such as an epoxy, or the like, may be used.

Although the present exemplary embodiment describes a case in which the spacers 30 are disposed between the first and second lenses 21 and 22, the present invention is not limited thereto. When the lens unit 20 is configured of at least three lenses, the spacers 30 may be respectively formed between adjacent lenses of the lens unit.

Hereinafter, a method of manufacturing a lens module according to an exemplary embodiment of the present invention will be described.

First, a method of manufacturing a lens module according to an exemplary embodiment of the present invention will be schematically described with reference to FIGS. 1 through 3. The first and second lenses 21 and 22 are manufactured. The spacers 30 are disposed at the corners 22a to 22d of the second lens 22 so that the first and second lenses 21 and 22 maintain a predetermined distance therebetween. Then, the first lens 21 is stacked above the second lens 22 in the optical axis direction, the second lens 22 having the spacers 30 disposed thereon, such that a lens module according to an exemplary embodiment of the present invention is completed.

Meanwhile, in manufacturing the lens module, the spacers 30 may be attached to the upper lens or the lower lens in the optical axis direction. That is, the spacers 30 may also be disposed at corners of a lower surface of the first lens 21 in the optical axis direction. However, in the present exemplary embodiment, a case in which the spacers 30 are disposed on the lower lens in the optical axis direction will be described for convenience of description.

First, the first lens 21 and the second lens 22 are manufactured. The first lens 21 is manufactured to have the first lens function unit 211 and the first flange 212 formed around the first lens function unit 211, the first lens function unit 211 having the lens function surfaces 211a and 211b formed on the upper and lower surfaces of the first lens 21 in the optical axis direction.

Likewise, the second lens 22 is also manufactured to have the second lens function unit 221 and the second flange 222 formed around the second lens function unit 221, the second lens function unit 221 having the lens function surfaces 221a and 221b formed on the upper and lower surfaces of the second lens 22 in the optical axis direction.

The first and second lenses 21 and 22 may be manufactured by injecting a resin material into a mold including a cavity having a shape of the first and second lenses 21 and 22, and pressing and heating the resin material, or by forming lenses in a wafer level and cutting the same in lens units to have the rectangular shape.

Then, the spacers 30 are disposed at the corners 22a to 22d of the second lens 22. More specifically, the first to fourth spacers 31 to 34 are respectively disposed at the corners 22a to 22d of the second flange 222.

Next, the first lens 21 is stacked above the second lens 22 in the optical axis direction, the second lens 22 having the spacers 30 disposed thereon. Thus, the lens module according to an exemplary embodiment of the present invention is completed.

Although the exemplary embodiment of the present invention describes a case in which the lens module is completed by separately manufacturing and assembling the first lens, the second lens, and the four spacers, the present invention is not limited thereto. Since individual lenses are formed by manufacturing the lenses in the wafer level and cutting the same in lens units, the spacers are disposed on a lens wafer and the lens wafer is cut in lens units, whereby a lens unit manufacturing process may be simplified.

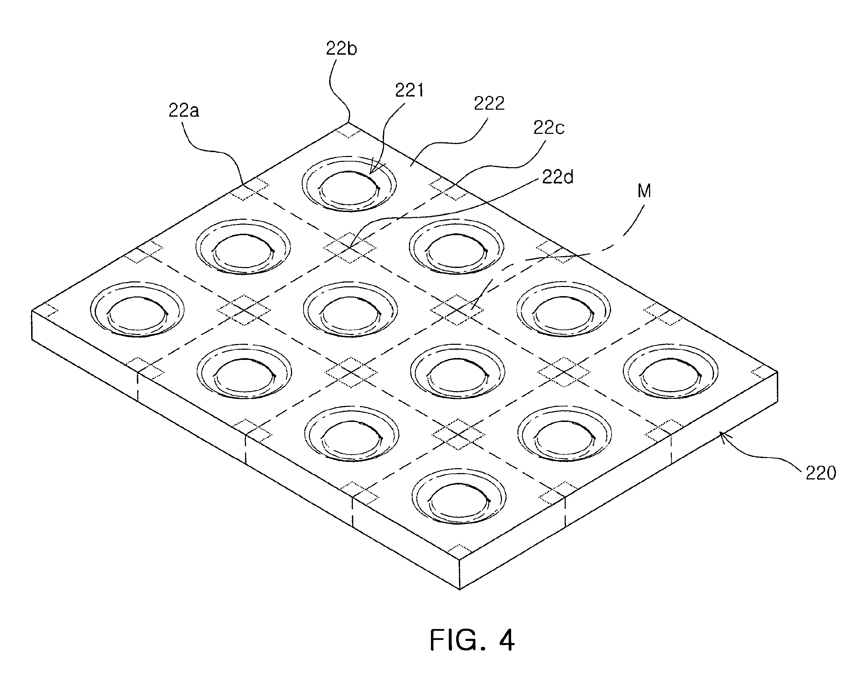

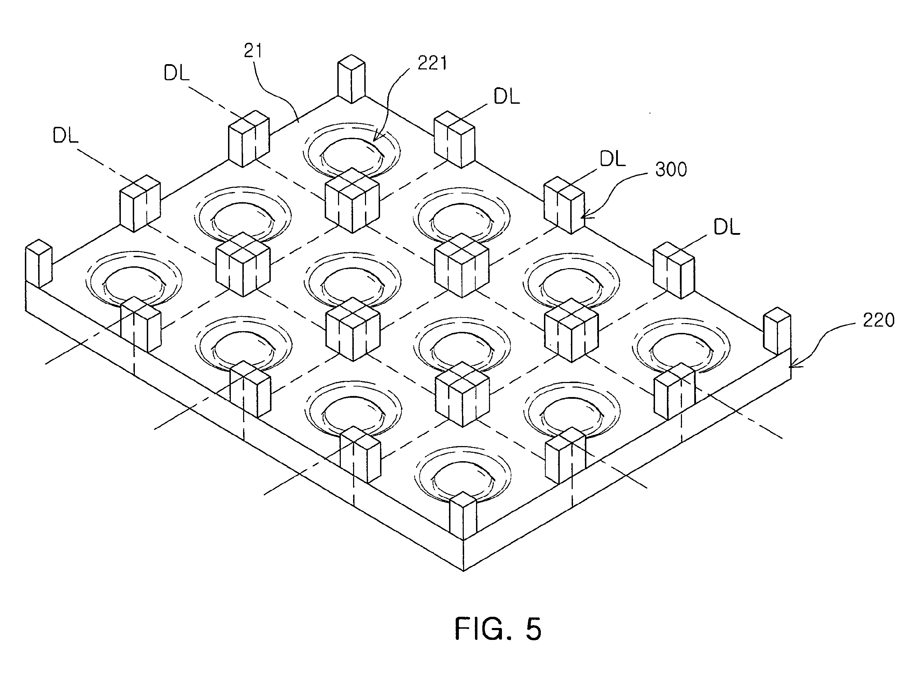

Hereinafter, a method of manufacturing a lens module in a wafer level according to an exemplary embodiment of the present invention will be described with reference to FIGS. 4 and 5.

FIGS. 4 and 5 are views showing a method of manufacturing a lens module according to an exemplary embodiment of the present invention.

Referring to FIG. 4, a lens wafer 220 having a plurality of lenses arranged therein is manufactured. The lens wafer may be manufactured by dispensing a resin material into a mold including a cavity having a shape corresponding to the plurality of lenses and pressing and hardening the resin material.

Referring to FIG. 5, spacer members 300 are disposed on the corners 22a to 22d (See FIG. 4) of the lens 22 at the lens wafer 220. The spacer members 300 are disposed in the corners of one lens and in the corners (M of FIG. 4) of adjacent lenses at the lens wafer 220. In disposing the spacer members 300, an alignment jig may be used in order to accurately align the spacer members 300.

When the lens wafer 220 having the spacer members 300 disposed thereon is cut in lens units along a dicing line (DL), a structure in which the spacers 30 are disposed at the corners 22a to 22d of the second lens 22 may be manufactured. That is, in the present exemplary embodiment, since the spacer members covering the corners of the adjacent lenses are disposed in a horizontal direction, and the lens wafer is cut in lens units, such that the spacer members are also cut, a process for forming the spacers may be simplified. That is, since four spacers 30 may be formed by disposing one spacer member 300, three processes per one spacer member may be reduced as compared to a case in which the spacers are individually disposed, in mass producing the lens.

Meanwhile, although the lens module according to an exemplary embodiment of the present invention may be manufactured by manufacturing a first lens wafer having the first lenses 21 and a second lens wafer having the second lenses 22 having the spacers 30 disposed thereon, cutting the first lens wafer and the second lens wafer in lens units, and then stacking the individual first lenses 21 on the individual second lenses 22, the present invention is not limited thereto. The lens module according to an exemplary embodiment of the present invention may also be manufactured by stacking the first lens wafer and the second lens wafer along the optical axis and then cutting the stacked lens wafers in lens units.

In addition, although the present exemplary embodiment describes a case in which the spacer members are individually manufactured as separate members and are respectively disposed at the corners of the adjacent lenses, the present invention is not limited thereto. The spacer members may be manufactured in a wafer level.

That is, the spacer members may also be manufactured by manufacturing a spacer wafer having the same size as that of the lens wafer, removing parts except for the spacer members and connection parts connecting the spacer members, disposing non-removed parts between the first lens wafer and the second lens wafer, and then cutting the wafers in lens units. In this case, the connection parts may be formed to have a minimal width in a horizontal direction in order to minimize an overall size of the lens module.

When the spacers are manufactured in the wafer level as described above, the method of manufacturing a lens module according to an exemplary embodiment of the present invention may be further simplified.

As set forth above, in a lens module and a method of manufacturing the same according to exemplary embodiments of the present invention, the distance between the lenses of the lens module may be spaced, while the overall size of the lens module is minimized.

While the present invention has been shown and described in connection with the exemplary embodiments, it will be apparent to those skilled in the art that modifications and variations can be made without departing from the spirit and scope of the invention as defined by the appended claims. For example, in the present invention, the spacers may be arranged and aligned in various schemes, and the sequence of individual steps in the method of manufacturing a lens module may also be changed. Accordingly, the actual scope of the technical protection of the present invention must be determined by the spirit of the appended claims.

## Claims

1. A lens module comprising :
a lens unit having at least one or more lenses stacked along an optical axis; and
spacers disposed at corners of the at least one or more lenses so that lenses disposed to be adjacent to each other in an optical axis direction of the lens unit have a predetermined distance maintained therebetween.

2. The lens module of claim 1, wherein the spacers have a pillar shape.

3. The lens module of claim 1, wherein the lens has a lens function surface formed on at least one surface thereof and a flange formed around the lens function surface.

4. The lens module of claim 3, wherein the spacers are disposed at corners of the flange.

5. The lens module of claim 1, wherein the lens has a rectangular shape.

6. The lens module of claim 1, wherein the spacers are disposed at four corners of the lens, respectively.

7. The lens module of claim 1, wherein the spacers are made of the same material as that of the lens.

8. The lens module of claim 1, wherein the spacers are made of a material containing a black component so as to block unnecessary light incident through the lens unit.

9. A method of manufacturing a lens module, the method comprising:
preparing at least one or more lenses;
disposing spacers at corners of the at least one or more lenses so that lenses disposed to be adjacent to each other in an optical axis direction thereof have a predetermined distance maintained therebetween; and
stacking the at least one or more lenses along an optical axis such that the spacers are interposed therebetween.

10. The method of claim 9, wherein the preparing of the at least one or more lenses includes cutting a lens wafer having the at least one or more lenses arranged therein in lens units.

11. The method of claim 10, wherein the disposing of the spacers includes disposing spacer members at corners of one lens and corners of adjacent lenses in the lens wafer and cutting the lens wafer in lens units.

12. The method of claim 11, wherein the stacking of the at least one or more lenses along the optical axis includes stacking another lens wafer on the spacer members disposed on the lens wafer and cutting the stacked lens wafers in lens units.

13. The method of claim 9, wherein the preparing of the at least one or more lenses includes forming a lens function surface on at least one surface of each of the at least one or more lenses and forming a flange around the lens function surface.

14. The method of claim 13, wherein the disposing of the spacers includes disposing the spacers at corners of the flange.

15. The method of claim 9, wherein the preparing of the at least one or more lenses includes preparing a lens having a rectangular shape.

16. The method of claim 9, wherein the disposing of the spacers includes disposing the spacers at four corners of the lens, respectively.

17. The method of claim 9, wherein the spacers are made of the same material as that of the lens.

18. The method of claim 9, wherein the spacers are made of a material containing a black component so as to block unnecessary light incident through the lens.
